(19) Europäisches Patentamt

European Patent Office

Office européen des brevets

(11) **EP 1 092 566 B1**

(12) **EUROPÄISCHE PATENTSCHRIFT**

(45) Veröffentlichungstag und Bekanntmachung des Hinweises auf die Patenterteilung:
**05.10.2005 Patentblatt 2005/40**

(51) Int Cl.7: **B60C 11/00**, B60C 3/04

(21) Anmeldenummer: **00119805.0**

(22) Anmeldetag: **12.09.2000**

(54) **Fahrzeugluftreifen**

Vehicle tyre

Bandage pneumatique pour véhicule

(84) Benannte Vertragsstaaten:
**DE ES FR GB IT PT**

(30) Priorität: **12.10.1999 DE 19949064**

(43) Veröffentlichungstag der Anmeldung:
**18.04.2001 Patentblatt 2001/16**

(73) Patentinhaber: **Continental Aktiengesellschaft**
**30165 Hannover (DE)**

(72) Erfinder:
• **Baumhöfer, Johannes, Josef**
**30900 Wedemark (DE)**
• **Metge, Axel**
**30179 Hannover (DE)**
• **Wies, Burkhard, Dr.**
**30455 Hannover (DE)**

(56) Entgegenhaltungen:
**EP-A- 0 402 303**     **EP-A- 0 424 155**
**EP-A- 0 739 759**

**Beschreibung**

Die Erfindung betrifft einen Fahrzeugluftreifen in Radialbauart, insbesondere für Personenkraftwagen, mit einem Laufstreifen, welcher, im Querschnitt betrachtet, eine gekrümmte Außenkontur besitzt, die sich aus Bereichen mit drei unterschiedlich großen Radien zusammensetzt, wobei ein erster, den Reifenzenit einschließender und zu diesem symmetrisch verlaufender Konturbereich mit einem ersten Radius TR1, an diesen beidseitig anschließend je ein zweiter Konturbereich mit einem zweiten Radius TR2 und, zumindest zum Teil über die Schulterbereiche verlaufend, je ein weiterer Konturbereich mit einem Radius TRS vorgesehen sind, wobei der zweite Radius TR2 kleiner als TR1 und der Schulterradius TRS der kleinste dieser Radien ist, wobei die Größe von TR2 im Verhältnis zur Größe von TR1 gemäß der Beziehung 0,08 TR1≤TR2≤0,25 TR1 und die Größe von TRS im Verhältnis zur Größe von TR1 gemäß der Beziehung 0,03 TR1≤TRS≤0,07 TR1 bestimmt ist.

Es sind unterschiedliche Auslegungen der Außenkontur eines Reifens im Laufstreifenbereich bekannt. So kann die Außenkontur eines Reifens im Laufstreifenbereich so ausgelegt werden, dass deren Krümmung, bis auf die Übergangsbereiche in den Schultern, einem einzigen Radius folgt. Dies hat jedoch, insbesondere dann, wenn solche Reifen mit einem niedrigeren Querschnitt versehen werden, eine ungleichmäßige Druckverteilung in der Bodenaufstandsfläche zur Folge. Bei derartig ausgelegten Reifen ist oft der Kontaktdruck in den Schulterbereichen erhöht, was sich nachteilig auf einige Reifeneigenschaften, wie Abrollgeräusch, Bremsverhalten, Haltbarkeit bei höheren Geschwindigkeiten, den Rollwiderstand und die Aquaplaningeigenschaften auswirken kann.

Üblich ist auch eine Auslegung der Laufstreifenkontur mit Bereichen mit drei unterschiedlichen Radien, wie es bei einem Fahrzeugluftreifen der eingangs genannten Art der Fall ist. Der Radius TRS bestimmt die Krümmung und somit die Kontur der in die Schulterbereiche übergehenden Bereiche wird gegenüber den Radien in den anderen Bereichen klein gewählt. Konturauslegungen mit drei Radien können bei entsprechender Wahl der Größe der Radien und der Breite der Bereiche, über die sie verlaufen, die erwünschte gleichmäßige Druckverteilung in der Bodenaufstandsfläche zumindest weitgehend sicherstellen.

Ein Fahrzeugluftreifen der eingangs genannten Art ist aus der EP 0 739 759 A bekannt. Um einen ungleichförmigen Abrieb des Laufstreifens zu vermeiden, wird eine spezielle Außenkontur für den mit dem Untergrund beim Abrollen des Reifens in Kontakt tretenden Bereich des Laufstreifens vorgeschlagen. Dabei wird der Laufstreifen über seine Breite in Bereiche mit drei unterschiedlichen Radien geteilt, die in bestimmte Beziehungen zur Laufstreifenbreite zu setzen sind. Auch die aus der EP 0 424 155 A und der EP 0 402 303 A bekannten Fahrzeugluftreifen offenbaren Laufstreifen, deren Außenkontur gemäß drei unterschiedlich großen Radien ausgelegt ist.

Es gibt eine Anzahl weiterer Patentanmeldungen, welche sich mit einer Optimierung der Krümmung der Außenkontur im Laufstreifenbereich befassen. Diesbezüglich wird beispielsweise auf die EP-A 0 269 301 verwiesen, wo vorgeschlagen ist, die Größe der Radien zur maximalen Querschnittsbreite des Reifens in Beziehung zu setzen. Der eine, den Reifenzenit einschließende Bereich der Außenkontur wird dabei mit einem Radius versehen, der zwischen dem 1,5- bis 2,5-fachen der maximalen Breite des auf eine Felge montierten und unter Innendruck gesetzten Reifens gewählt wird, der zweite Radius soll größer sein als der erste Radius, insbesondere das 1,5- bis 2,5-fache des ersten Radius betragen.

Die EP-B 0 323 519 befasst sich mit einer Vergleichmässigung des Kontaktdruckes des Reifens in der Bodenaufstandsfläche, um einen ungleichmäßigen Abrieb zu verhindern und den Nassgriff sowie den Fahrkomfort des Reifens zu verbessern. Auch in diesem Patent werden bestimmte Radien für die Bereiche der Außenkontur des Laufstreifens vorgeschlagen und es wird die Anordnung der Seitenwände in bestimmte Beziehungen zu den Verhältnissen zwischen den Laufflächenradien und der maximalen Reifenbreite gesetzt.

In Folge der gekrümmten Auslegung der Außenkontur federt ein Reifen auch entsprechend ein, was zur Bildung einer Kräfte übertragenden Fahrfläche und zum Aufbau der gewünschten Tragfähigkeit über die Bodendrücke auch notwendig ist. Bei Lasterhöhung, was insbesondere dann der Fall ist, wenn das Fahrzeug gebremst wird, vergrößert sich die Bodenaufstandsfläche des Reifens. Die Vergrößerung der Bodenaufstandsfläche resultiert nun bei Reifen der eingangs genannten Art vorwiegend aus einer Verlängerung der Bodenaufstandsfläche und nur geringfügig aus einer Verbreiterung derselben.

Wünschenswert wäre es jedoch, wenn die beim Bremsen in Folge des Einfederungsverhaltens des Reifens auftretende Vergrößerung der Bodenaufstandsfläche in einem größeren Ausmaß von einer Verbreiterung derselben herrühren würde. Bei normaler Fahrzeugauslastung und unter normalen Fahrbedingungen soll jedoch nach wie vor eine vergleichsweise schmale Bodenaufstandsfläche bestehen bleiben, was für die Aquaplaningeigenschaften von Vorteil ist. Hier setzt nun die Erfindung ein, die sich zum Ziel gesetzt hat, einen Reifen derart auszulegen, dass dieses erwünschte Verhalten eintritt.

Gelöst wird die gestellte Aufgabe erfindungsgemäß dadurch, dass sich die Bereiche mit dem Schulterradius TRS, im Querschnitt betrachtet, jeweils zumindest so weit außerhalb der Laufstreifenbreite (TW) erstrecken, wie sie sich innerhalb der Laufstreifenbreite (TW) erstrecken, wobei sich die an den Konturbereich mit dem Radius TR1 beidseitig anschließenden Konturbereiche mit dem Radius TR2, im Querschnitt betrachtet, bis zu zwei Punkten (P$_2$) er-

strecken, deren gegenseitiger Abstand TW2 gemäß der Beziehung

$$0,65\ NB \leq TW2 \leq 0,8\ NB$$

ermittelt ist, wobei NB die Nennbreite des Reifens ist.

Der Größe des Schulterradius TRS und dessen Abstimmung mit den beiden weiteren Radien TR1 und TR2 haben besondere Bedeutung für die erzielbare Verbreiterung der Bodenaufstandsfläche unter Last.

Die Auswahl der Radienverhältnisse in dem Anspruch 1 erwähnten Bereichen stellt sicher, dass bei einer Erhöhung der Last, demnach beim Bremsen, die beim Einfedern stattfindende Vergrößerung der Bodenaufstandsfläche vorrangig mit einer Verbreiterung derselben einhergeht und nur in einem sehr geringen Ausmaß mit einer Verlängerung derselben. Bei einer normalen Fahrzeugbelastung, unter normalen Fahrbedingungen, hat ein mit einer erfindungsgemäß ausgelegte Außenkontur versehener Reifen nach wie vor die erwünschte, vergleichsweise schmale Bodenaufstandsfläche. Erfindungsgemäß ausgeführte Reifen können somit wesentlich besser als bekannte Reifen bezüglich ihrer Bremseigenschaften optimiert werden, beispielsweise über die Auslegung der Struktur des Laufstreifenprofils. Die Aquaplaningeigenschaften werden durch die sich unter normalen Fahrbedingungen nach wie vor im üblichen Ausmaß einstellende Breite der Bodenaufstandsfläche nicht beeinträchtigt.

Unter Beibehaltung einer gleichmäßigen Druckverteilung in der Bodenaufstandsfläche lässt sich eine optimale Verbreiterung der Bodenaufstandsfläche unter Belastung dann erzielen, wenn der Radius TRS in der Größenordnung von 4 bis 5% der Größe des Radius TR1 beträgt.

In diesem Zusammenhang ist auch das Verhältnis der Radien TR2 zu TR1 von Bedeutung, wobei der diesbezügliche optimale Bereich dann vorliegt, wenn der Radius TR2 10 bis 22% des Radius TR1 beträgt.

Die tatsächliche Größe von TR1 wird gemäß der Beziehung

$$3,5\ NB \leq TR1 \leq 5,0\ NB,\ \text{insbesondere } 3,7\ NB \leq TR1 \leq 4,6\ NB,$$

ermittelt, wobei NB die Nennbreite des Reifens ist. Ausgehend von TR1 lassen sich die entsprechenden Werte nach obigen Beziehungen ermitteln und optimieren.

Für eine Beibehaltung einer möglichst gleichmäßigen Druckverteilung in der Bodenaufstandsfläche ist auch die Wahl der Breite jener Bereiche von Bedeutung, wo die Außenkontur gemäß den beiden Krümmungsradien TR1 undTR2 ausgelegt wird. Diesbezüglich sollte der Konturbereich mit dem ersten Radius TR1, im Querschnitt betrachtet, über einen Bereich mit einer Breite TW1 verlaufen, wobei TW1 aus der Beziehung

$$0,35\ NB \leq TW1 \leq 0,65\ NB,\ \text{insbesondere } 0,4\ NB \leq TW1 \leq 0,6\ NB$$

ermittelt wird.

Weitere Merkmale, Vorteile und Einzelheiten der Erfindung werden nun anhand der Zeichnung näher beschrieben. Die beiden Zeichnungsfiguren sind schematische Darstellungen, wobei

Fig. 1 einen Querschnitt durch einen gemäß der Erfindung ausgeführten Fahrzeugluftreifen für Personenkraftwagen und

Fig. 2 lediglich den Verlauf der Außenkontur und den Verlauf der Unterzugskontur des Reifens aus Fig. 1

darstellt.

Die in der nachfolgenden Beschreibung enthaltenen bzw. erwähnten Werte für Radien und sonstige Abmessungen am Reifen sind die betreffenden Formdaten (Abmessungen der Vulkanisationsform). Ein auf eine Feige montierter und unter Nenndruck und Nennlast (gemäß E.T.R.T.O. Standards) gesetzter Reifen hat im Allgemeinen zumindest im Wesentlichen übereinstimmende Abmessungen.

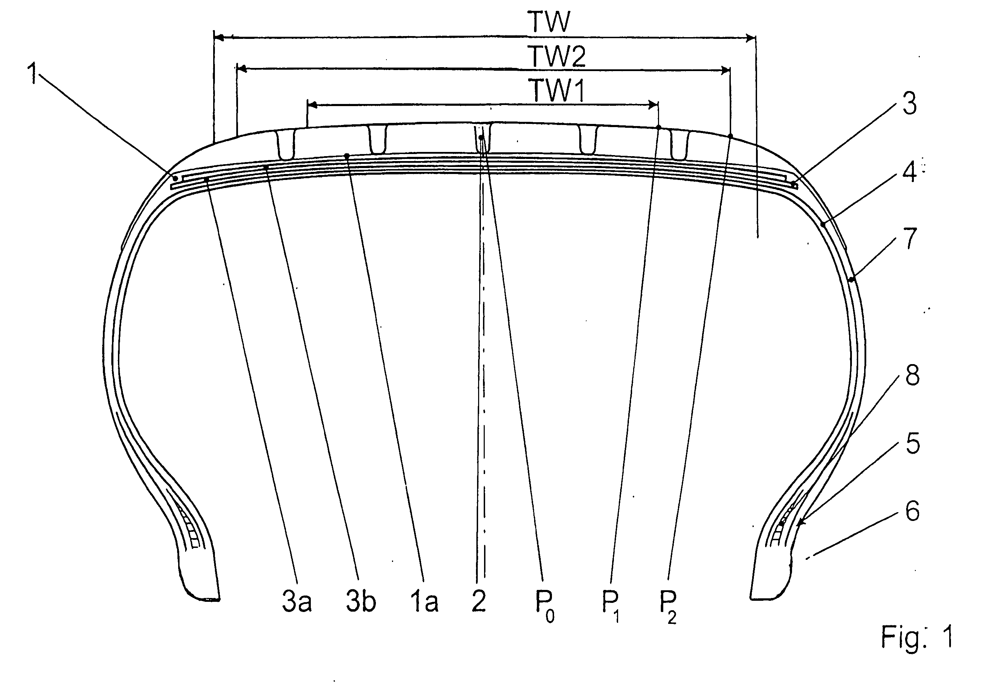

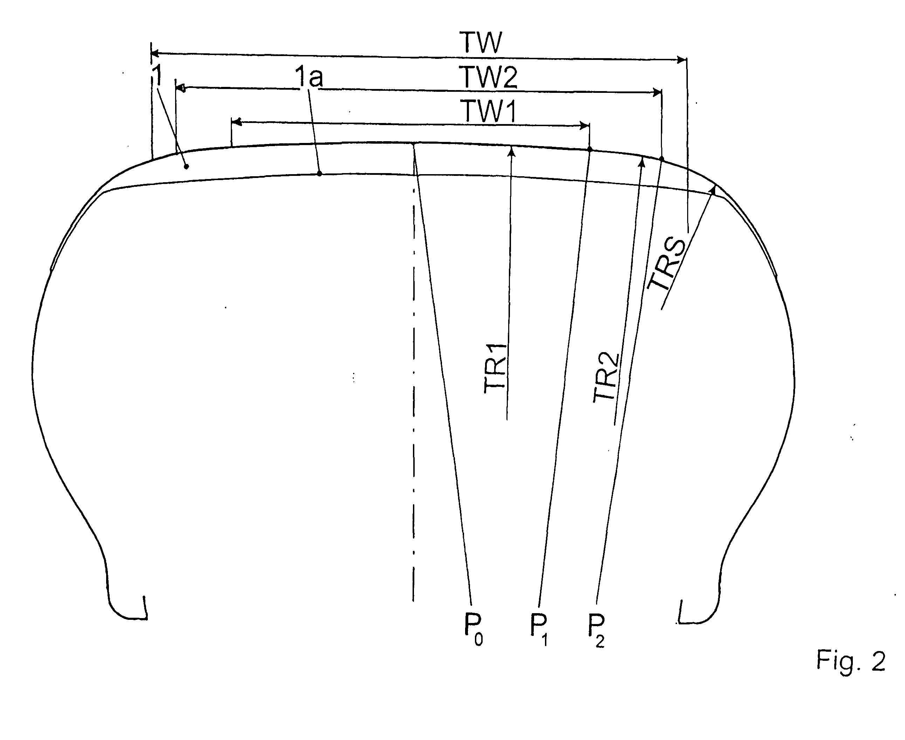

Der in Fig. 1 dargestellte Reifen ist ein PKW-Reifen und weist einen Laufstreifen 1, welcher mit einer beliebigen Laufstreifenprofilierung versehen sein kann, auf. Von dieser Laufstreifenprofilierung sind in Fig. 1 beispielhaft Umfangsnuten 2 dargestellt. Der Laufstreifen 1 verläuft seitlich in die Schulterbereiche des Reifens hinein und ist somit breiter als die in den Zeichnungsfiguren eingezeichnete Laufstreifenbreite TW. Die Laufstreifenbreite TW entspricht der größten Breite des Reifenabdruckes am Untergrund, wenn der Reifen auf einer Felge montiert ist und unter Druck gesetzt ist. Die dargestellten Umfangsnuten 2 reichen bis auf die vorgesehene maximale Profiltiefe, die bei Reifen für Personenkraftwagen im Allgemeinen 7 bis 8 mm gewählt wird. Selbstverständlich können auch weitere Profilstrukturen, beispielsweise in Querrichtung verlaufende Nuten, vorgesehen werden, die, mit Ausnahme eines meist flacher werdenden Verlaufs in den Schulterbereichen, üblicherweise bis auf die maximale Profiltiefe reichen. Der Nutgrund dieser Profilstrukturen ist über den Reifenumfang von einer Einhüllenden begrenzt, von der in Fig. 1 und Fig. 2 die Schnittkontur, die mit 1a beziffert ist und als Unterzugskontur bezeichnet wird, dargestellt ist.

Radial innerhalb des Laufstreifens verläuft ein Gürtelverband 3, der bei der Ausführungsform gemäß Fig. 1 zwei Gürtellagen 3a, 3b aufweist, von welchen die radial weiter innen gelegene Gürtellage 3a breiter ausgeführt ist. Die beiden Gürtellagen 3a, 3b können auf herkömmliche Art und Weise aufgebaut sein, beispielsweise aus in eine Gummimischung eingebetteten und innerhalb jeder Lage jeweils parallel zueinander verlaufenden Stahlkorden bestehen. Die gegenseitige Anordnung der beiden Gürtellagen 3a, 3b bzw. der Stahlkorde in den Gürtellagen 3a, 3b erfolgt üblicherweise derart, dass sich die in der einen Lage verlaufenden Stahlkorde mit den in der zweiten Lage verlaufenden Stahlkorden unter einem spitzen Winkel kreuzen.

Der in Fig. 1 dargestellte Reifen weist ferner eine hier einlagig ausgeführte Radialkarkasse 4 auf, die in den beiden Wulstbereichen 5 von innen nach außen über Wulstkerne 6 und wieder zurück in die Seitenwände verläuft, wo die Endbereiche der Karkasse 4 jeweils in einem Abstand von den oberen Endbereichen von Kernprofilen 8 liegen.

Wie aus beiden Zeichnungsfiguren hervorgeht ist die Außenkontur des Laufstreifens über der Laufstreifenbreite TW und bis in die Schulterbereiche hinein im Querschnitt gekrümmt ausgeführt. Eine Krümmung der Außenkontur ist üblich und notwendig, damit beim Einfedern des Reifens, was zur Bildung einer Kräfte übertragenden Fahrfläche und zum Aufbau der Tragfähigkeit über die wirkenden Bodendrücke erforderlich ist, die Aufstandsdrücke innerhalb der Fahrfläche möglichst ausgeglichen sind.

Bei Lasterhöhung, beispielsweise beim Bremsen, bewirkt die stattfindende größere Einfederung des Reifens eine Vergrößerung der Bodenaufstandsfläche, die bei Reifen aus dem Stand der Technik zum Großteil aus einer Vergrößerung der Länge der Bodenaufstandsfläche resultiert und nur in einem unbedeutenden Ausmaß auch von einer Verbreiterung derselben herrührt.

Gemäß der gegenständlichen Erfindung wird über eine besondere Auslegung der Außenkontur erreicht, dass bei einer Aufrechterhaltung von ausgeglichenen Bodenaufstandsdrücken innerhalb der Fahrfläche bei einer Lasterhöhung die Vergrößerung der Bodenaufstandsfläche in einem deutlich größeren Ausmaß als beim Stand der Technik aus einer Verbreiterung derselben und in einem geringen, nicht nennenswerten Ausmaß aus einer Verlängerung derselben resultiert. Eine breite Aufstandsfläche ist unter Lasterhöhung, das heißt beim Bremsen, von Vorteil, da derart das Profil besser und über eine größere Breite auf gute Bremseigenschaften auslegbar ist. Unter normalen Fahrbedingungen, unter normaler Fahrzeugbelastung, soll eine vergleichsweise schmale Bodenaufstandsfläche vorliegen, was positiv für die Aquaplainingeigenschaften des Reifens ist. Die im Rahmen der gegenständlichen Erfindung getroffene Auslegung der Außenkontur stellt diese günstigen Bedingungen sicher.

Wie insbesondere Fig. 2 zeigt, setzt sich die Außenkontur des Laufstreifenbereiches des Reifens aus Bereichen mit drei unterschiedlich großen Radien TR1, TR2 und TRS zusammen. Dabei ist vorrangig das Verhältnis der drei Radien zueinander von Bedeutung, aber auch deren gewählte Größe und die Größe der Bereiche der Außenkontur, wo sie sich jeweils erstrecken.

Der Konturbereich mit dem Radius TR1 verläuft symmetrisch zu dem durch den Punkt $P_0$ gekennzeichneten Reifenzenit und schließt diesen mit ein. Dieser Konturbereich erstreckt sich daher beidseitig von $P_0$ bis zu Punkten $P_1$, für deren gegenseitigen Abstand TW1 gilt

$$0{,}35 \text{ NB} \leq \text{TW1} \leq 0{,}65 \text{ NB insbesondere } 0{,}4 \text{ NB} \leq \text{TW1} \leq 0{,}6 \text{ NB,}$$

wobei NB die Nennbreite des jeweiligen Reifens gemäß E.T.R.T.O. ist.

Beidseitig an den Bereich mit dem Radius TR1 schließen die beiden Bereiche mit dem zweiten Radius TR2 an, wobei die Übergänge nicht abrupt, sondern leicht fließend gewählt werden. Die Konturbereiche mit dem Radius TR2 verlaufen dabei jeweils zwischen den Punkten $P_1$ und weiteren Punkten $P_2$. Die Größe des gegenseitigen Abstandes TW2 der beiden Punkte $P_2$ wird dabei gemäß der Beziehung

$$0{,}6 \text{ NB} \leq \text{TW2} \leq 0{,}85 \text{ NB, insbesondere } 0{,}65 \text{ NB} \leq \text{TW2} \leq 0{,}8 \text{ NB bestimmt.}$$

Dabei werden im Allgemeinen größere Werte für TW1 und TW2 bei Reifen mit kleineren Querschnittsverhältnissen gewählt.

Die Konturbereiche mit dem dritten Radius TRS sind Übergangsbereiche in die Reifenschultern, sodass der Schulterradius TRS jeweils über die Laufstreifenbreite TW, insbesondere zumindest soviel wie innerhalb der Laufstreifenbreite TW, hinaus verläuft.

Die Wahl der Größe der Radien, insbesondere der Größe des Schulterradius TRS ist nun von besonderer Bedeutung, um die oben erwähnte Verbreiterung der Bodenaufstandsfläche bei Lasterhöhung zu erzielen. Dazu wird TR2 im Verhältnis zu TR1 so gewählt, dass die Bezeichnung

$$0,08 \ TR1 \leq TR2 \leq 0,25 \ TR1$$

gilt.

Besonders bevorzugte Größenverhältnisse sind in jenem Bereich, wo TR2 zwischen 10 und 22% von TR1 beträgt.

Die Größe von TRS wird ebenfalls in einem bestimmten Verhältnis zur Größe von TR1 gesetzt, wobei

$$0,03 \ TR1 \leq TRS \leq 0,07 \ TR1$$

gewählt werden soll. Ein besonders bevorzugter Bereich für die das gegenseitige Verhältnis dieser Radien zueinander liegt dort, wo TRS 4 bis 5% von TR1 gewählt wird.

Die tatsächliche Größe von TR1 wird dabei in Abhängigkeit von der Nennbreite NB des Reifens ermittelt. Die Größe von TR1 wird aus der Beziehung

$$3,5 \ NB \leq TR1 \leq 5,0 \ NB, \ \text{insbesondere} \ 3,7 \ NB \leq TR1 \leq 4,6 \ NB,$$

ermittelt. Die möglichen Werte für TR2 und TRS werden aus obigen Bezeichnungen bestimmt.

Wie bereits erwähnt, stellt sich bei einem mit einer erfindungsgemäß ausgeführten Außenkontur versehenen Reifen bei normaler Fahrzeugbelastung nach wie vor eine vergleichsweise schmale Bodenaufstandsfläche ein, wobei bei einer Lasterhöhung, etwa beim Bremsen, sich die Aufstandsfläche deutlich mehr verbreitert, als dies bei Reifen aus dem Stand der Technik der Fall ist.

Versuche haben gezeigt, dass beim Bremsen (unter einer Mehrlast von 50% auf der Vorderachse) bei herkömmlichen Reifen eine Verbreiterung der Bodenaufstandsfläche in der Größenordnung von 2% (gegenüber der Breite bei normaler Fahrzeugbelastung) auftritt. Bei ansonsten übereinstimmend gestalteten, jedoch mit erfindungsgemäßer Außenkontur versehenen Reifen war gemäß den durchgeführten Versuchen eine Verbreiterung von 5 bis 10% feststellbar.

**Patentansprüche**

1. Fahrzeugluftreifen in Radialbauart, insbesondere für Personenkraftwagen, mit einem Laufstreifen, welcher, im Querschnitt betrachtet, eine gekrümmte Außenkontur besitzt, die sich aus Bereichen mit drei unterschiedlich großen Radien zusammensetzt, wobei ein erster, den Reifenzenit einschließender und zu diesem symmetrisch verlaufender Konturbereich mit einem ersten Radius TR1, an diesen beidseitig anschließend je ein zweiter Konturbereich mit einem zweiten Radius TR2 und, zumindest zum Teil über die Schulterbereiche verlaufend, je ein weiterer Konturbereich mit einem Radius TRS vorgesehen sind, wobei der zweite Radius TR2 kleiner als TR1 und der Schulterradius TRS der kleinste dieser Radien ist, wobei die Größe von TR2 im Verhältnis zur Größe von TR1 gemäß der Beziehung $0,08 \ TR1 \leq TR2 \leq 0,25 \ TR1$ und die Größe von TRS im Verhältnis zur Größe von TR1 gemäß der Beziehung $0,03 \ TR1 \leq TRS \leq 0,07 \ TR1$ bestimmt ist,
**dadurch gekennzeichnet,**
**dass** sich die Bereiche mit dem Schulterradius TRS, im Querschnitt betrachtet, jeweils zumindest so weit außerhalb der Laufstreifenbreite (TW) erstrecken, wie sie sich innerhalb der Laufstreifenbreite (TW) erstrecken, wobei sich die an den Konturbereich mit dem Radius TR1 beidseitig anschließenden Konturbereiche mit dem Radius TR2, im Querschnitt betrachtet, bis zu zwei Punkten ($P_2$) erstrecken, deren gegenseitiger Abstand TW2 gemäß der Beziehung

$$0,65 \ NB \leq TW2 \leq 0,8 \ NB$$

ermittelt ist, wobei NB die Nennbreite des Reifens ist.

2. Fahrzeugluftreifen nach Anspruch 1, **dadurch gekennzeichnet, dass** der Radius TRS 4 bis 5% des Radius TR1 beträgt.

3. Fahrzeugluftreifen nach Anspruch 1, **dadurch gekennzeichnet, dass** der Radius TR2 10 bis 22% des Radius TR1 beträgt.

4. Fahrzeugluftreifen nach einem der Ansprüche 1 bis 3, **dadurch gekennzeichnet, dass** die Größe von TR1 gemäß der Beziehung

$$3{,}5\ NB \leq TR1 \leq 5{,}0\ NB,\ \text{insbesondere}\ 3{,}7\ NB \leq TR1 \leq 4{,}6\ NB,$$

ermittelt ist, wobei NB die Nennbreite des Reifens ist.

5. Fahrzeugluftreifen nach einem der Ansprüche 1 bis 4, **dadurch gekennzeichnet, dass** der Konturbereich mit dem ersten Radius TR1, im Querschnitt betrachtet, über einen Bereich mit einer Breite TW1 verläuft, wobei TW1 aus der Beziehung

$$0{,}35\ NB \leq TW1 \leq 0{,}65\ NB,\ \text{insbesondere}\ 0{,}4\ NB \leq TW1 \leq 0{,}6\ NB$$

ermittelt ist.

**Claims**

1. Pneumatic vehicle tyre of a radial type, in particular for passenger cars, with a tread rubber which, when viewed in cross section, has a curved outer contour which is made up of regions with three radii of different sizes, a first contour region, including the tyre crown and extending symmetrically in relation to the latter, with a first radius TR1, a second contour region, respectively adjoining the said first region on both sides, with a second radius TR2, and, extending at least partly over the shoulder regions, in each case a further contour region with a radius TRS being provided, the second radius TR2 being smaller than TR1 and the shoulder radius TRS being the smallest of these radii, the size of TR2 in relation to the size of TR1 being determined according to the relationship $0.08\ TR1 \leq TR2 \leq 0.25\ TR1$ and the size of TRS in relation to the size of TR1 being determined according to the relationship

$$0.03\ TR1 \leq TRS \leq 0.07\ TR1,$$

**characterized**
**in that** the regions with the shoulder radius TRS, when viewed in cross section, extend in each case at least as far outside the tread rubber width (TW) as they extend inside the tread rubber width (TW), the contour regions with the radius TR2, adjoining the contour region with the radius TR1 on both sides, extending, when viewed in cross section, as far as two points ($P_2$) spaced apart by a distance TW2 determined according to the relationship

$$0.65\ NB \leq TW2 \leq 0.8\ NB,$$

where NB is the nominal width of the tyre.

2. Pneumatic vehicle tyre according to Claim 1, **characterized in that** the radius TRS is 4 to 5% of the radius TR1.

3. Pneumatic vehicle tyre according to Claim 1, **characterized in that** the radius TR2 is 10 to 22% of the radius TR1.

4. Pneumatic vehicle tyre according to one of Claims 1 to 3, **characterized in that** the size of TR1 is determined according to the relationship

$$3.5\ NB \leq TR1 \leq 5.0\ NB,\ \text{in particular}\ 3.7\ NB \leq TR1 \leq$$

4.6 NB,

where NB is the nominal width of the tyre.

**5.** Pneumatic vehicle tyre according to one of Claims 1 to 4, **characterized in that** the contour region with the first radius TR1, when viewed in cross section, extends over a region with a width TW1, TW1 being determined from the relationship

$$0.35 \text{ NB} \leq \text{TW1} \leq 0.65 \text{ NB, in particular } 0.4 \text{ NB} \leq \text{TW1}$$

$$\leq 0.6 \text{ NB.}$$

**Revendications**

**1.** Pneu à structure radiale pour véhicule et en particulier pour voiture automobile, qui présente une bande de roulement qui, vue en coupe transversale, a un contour extérieur incurvé et composé de trois parties de rayons différents, une première partie de contour qui contient le sommet du profil du pneu et présentant un premier rayon TR1 s'étendant symétriquement par rapport à ce sommet, deux deuxièmes parties de contour qui présentent un deuxième rayon TR2 se raccordant à chaque côté de la première partie de contour et deux autres parties de contour qui présentent un rayon TRS s'étendant au moins partiellement sur les parties d'épaulement, le deuxième rayon TR2 étant plus petit que TR1 et le rayon d'épaulement TRS étant le plus petit de ces rayons, la valeur relative de TR2 par rapport à la valeur de TR1 étant déterminée par la relation $0{,}08 \text{ TR1} \leq \text{TR2} \leq 0{,}25 \text{ TR1}$ et la valeur relative de TRS par rapport à la valeur de TR1 étant déterminée par la relation $0{,}03 \text{ TR1} \leq \text{TRS} \leq 0{,}07 \text{ TR1}$, **caractérisé en ce que**, vues en coupe transversale, les parties qui présentent le rayon d'épaulement TRS s'étendent à l'extérieur de la largeur de bande de roulement (TW) au moins aussi loin qu'à l'intérieur de cette largeur de la bande de roulement (TW), **en ce que** vues en coupe transversale, les parties de contour de rayon TR2 qui sont adjacentes de part et d'autre à la partie de contour de rayon TR1 s'étendent jusqu'à deux points $(P_2)$ qui, sont séparés l'un de l'autre par une distance TW2 définie par la relation

$$0{,}65 \text{ NB} \leq \text{TW2} \leq 0{,}8 \text{ NB}$$

dans laquelle NB est la largeur nominale du pneu.

**2.** Pneu de véhicule selon la revendication 1, **caractérisé en ce que** le rayon TRS représente de 4 à 5 % du rayon TR1.

**3.** Pneu de véhicule selon la revendication 1, **caractérisé en ce que** le rayon TR2 représente de 10 à 22 % du rayon TR1.

**4.** Pneu de véhicule selon l'une des revendications 1 à 3, **caractérisé en ce que** la valeur de TR1 est déterminée par la relation

$$3{,}5 \text{ NB} \leq \text{TR1} \leq 5{,}0 \text{ NB}$$

et en particulier par la relation

$$3{,}7 \text{ NB} \leq \text{TR1} \leq 4{,}6 \text{ NB,}$$

dans lesquelles NB représente la largeur nominale du pneu.

**5.** Pneu de véhicule selon l'une des revendications 1 à 4, **caractérisé en ce que** vue en coupe transversale, la partie de contour qui présente le premier rayon TR1 s'étend sur une partie de largeur TW1, TW1 étant déterminé par la

relation

$$0,35 \, NB \leq TW1 \leq 0,65 \, NB$$

et en particulier par la relation

$$0,4 \, NB \leq TW1 \leq 0,6 \, NB.$$

Fig: 1

EP 1 092 566 B1

Fig. 2

EP 1 092 566 B1